Europäisches Patentamt

European Patent Office

Office européen des brevets

(19)

(11) Publication number: **0 029 463**

**A1**

(12) **EUROPEAN PATENT APPLICATION**

(21) Application number: **79104669.1**

(22) Date of filing: **23.11.79**

(51) Int. Cl.³: **G 09 B 15/02**
**G 10 G 1/02**

(43) Date of publication of application:
**03.06.81 Bulletin 81/22**

(84) Designated Contracting States:
**AT DE FR IT**

(71) Applicant: **HSU, WEN TERNG**
**13, Lane 22 Min Sheng Rd. Tainan**
**Taiwan 700(TW)**

(72) Inventor: **HSU, WEN TERNG**
**13, Lane 22 Min Sheng Rd. Tainan**
**Taiwan 700(TW)**

(74) Representative: **Eitle, Werner, Dipl.Ing. et al,**
**Arabellastrasse 4 Sternhaus**
**D-8000 München 81(DE)**

(54) **A guitar chords slide rule device.**

(57) A guitar chords slide rule device is characterized in that a guitar fingerboard diagram with a fixed complete set of numerical notes is provided in any concerned key of a song by means of a main rule (1) and a slide rule (7) setting key values and the answers obtained through a reading window on the slide rule (7) from main rule (1) depending upon reading a graphic scale, including a unit of special design of chords-finger-position transparent sheets (13a, 13b, 13c). There is a synopsis of major to relative minor keys, naming of common used chords with its composing notes, complete finger position of chords on the fingerboard, synopsis of numerical to relative alphabetic notation and a guide of chords arrangement for a song and guide of change tone for equivalent chords.

EP 0 029 463 A1

A guitar chords slide rule device

The invention relates to a guitar chords slide rule device.

A guitar is a very popular musical instrument but hard to learn well. It is interesting to most people, because it is not expensive, easy to carry and provides a beautiful sound. If someone likes to play some folk-like music on it, this should not be hard for him to learn. Therefore, the guitar has become a treasured relaxation for people.

Upon a guitar playing search it has been understood and discovered that most young people were eager to learn and full of enthusiasm and interest at the beginning, but this decreased at a certain stage. There are so many questions, and they cannot get a reasonable answer. Even if they study hard for expert knowledge of guitar playing, whom shall they ask? Though there are hundreds of textbooks or guides on the market, it is hard to get a complete and easily understandable one. Furthermore they cannot understand the reasons for so many chords, so that this causes difficulties in studing.

The invention as claimed is intended to remedy these drawbacks and to provide a guitar chords slide rule device which provides a simple way to understand the principle of chords, and to eliminate the aforesaid learning difficulties with traditional textbooks.

For solving this problem the invention is characterized by being composed of a main rule, a slide rule, a transparent chords finger position sheets unit, said main rule having chromatic scales and a guitar fingerboard diagram marked with numerical notion, said slide rule having a key index and a displaying window to display complete notes on the fingerboard in any determined key, said key index maintaining movement in exactly the same proportion as key scales relative to frets of the fingerboard diagram.

Further the invention is characterized by including a synopsis of major to relative minor keys and a synopsis of numerical notation to relative alphabetic notation, said numerical notation with composing notes of chords scales being based on each basic note providing a common used chords name scale, as well as a guide for chords arrangement, and for the equivalent chords in another key tone.

According to another aspect of the invention the slide rule device is characterized by including a unit of transparent sheets with finger position marks piled on one another for indicating complete finger positions of a chord on said fingerboard diagram; including a main transparent sheet with a chords scale in a chromatic order for maintaining the movement in exactly the same proportion as said finger position marks relative to the notes on said fingerboard diagram, the other sheets having variable note marks in order to accord with some special composing notes of a chord by means of position holes between said transparent chord sheets.

The invention would doubtlessly be very helpful for guitar players. An experimented sample of the invention has been prepared, and by actual operation it has been found to be very convenient and accurate.

An embodiment of the invention is illustrated in the accompanying drawings in connection with a guitar chords slide rule in accordance with the invention and in which:

Fig. 1 is a pictorial projection illustration of one embodiment of the invention,

Fig. 2 is a graphic illustration of C-chord in C-key of the invention, and

Fig. 3 is a graphic illustration of F-chord in C-key of the invention.

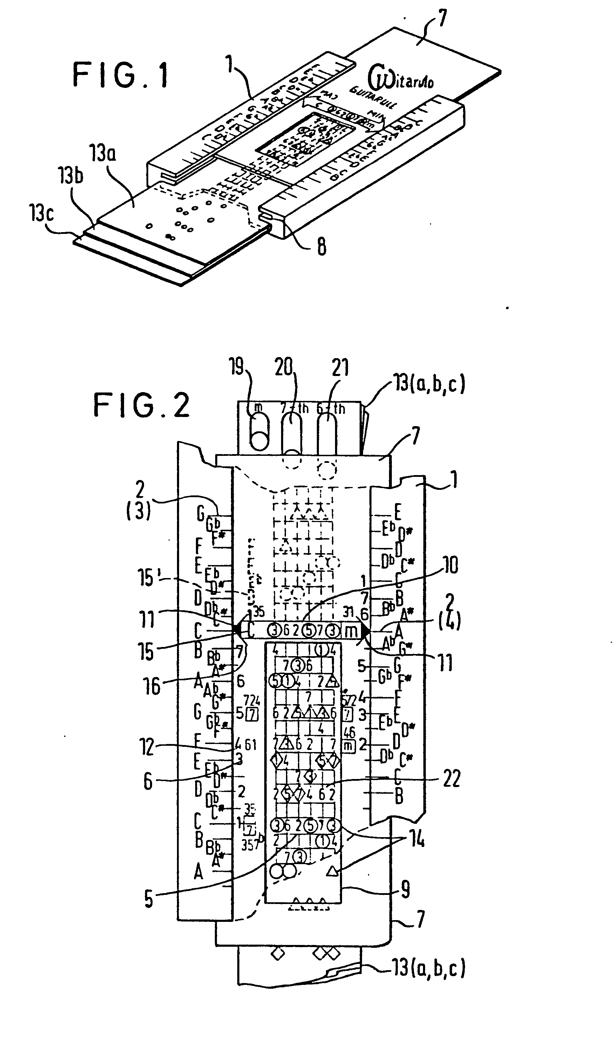

The slide rule has a main rule 1, a slide rule 7, and some chord-finger-position transparent sheets 13. The main rule 1 has two U-type grooves 8, one for the slide rule 7, the other for chord-finger-position transparent sheets 13. Two equal graduations of key scales 2 or 3,4 are printed on the flanges of the main rule 1. One is marked with twelve chromatic scales in alphabetic notation called major key scales 3 (Fig. 2), such as C, C$^{\#}$, (D$^{b}$), D, ... A, A$^{\#}$, (B$^{b}$), B, etc; the other is marked with minor (m) scales 4 also in alphabetic notation, such as Cm, C$^{\#}$m, ... A$^{\#}$m, (B$^{b}$m), Bm ... etc. and C-key graduation (MAJOR) is set to align the "Am" (MINOR) graduation and so on (Fig. 2) thus providing a graphic contrast of major to its relative minor key.

Said main rule 1 is printed at its inner bottom with a six strings fingerboard diagram 5, each distance of fret designed just the same as said key scales 2 graduation, each fret means for a difference of half note. In accordance with the arrangement of notes on the guitar, said six strings fingerboard diagram 5 is marked with natural numerical notes 22 (such as 1 2 3 4 5 6 7 1), which are arranged by means of inserting said slide rule 7 into the U-type grooves 8 on the main rule 1. Said slide rule 7 has a fingerboard diagram displaying window 9, and an open string notes displaying window 10 which is in connection with a key index 11 on both sides. The key index 11 is set to align to C (or Am) graduation on the key scales 2 (the slide rule remains at same position), then said open string notes displaying window 10 shows the reading 3 6 2 5 7 3 (six open string notes in C or Am key). Meanwhile said fingerboard diagram displaying window 9 shows the complete notes of the fingerboard upon said fingerboard diagram 5 in which notes are arranged according to the principles of natural scale. Means for the notes of 3(mi), 4(fa) and 7(Ti), 1(Do) has a difference of one fret distance (= a semitone) and the rest of each contiguous note on each string has a difference of two fret (= one note). Thus, if said key index 11 is displaced on the slide rule with D major (or Bm minor) on the key scale 3,4, then the movement is maintained in exactly the same proportion as said key scales relative to the notes on the fingerboard diagram, complete notes on fingerboard in D (or Bm) key thus being provided, and so on, so that a complete notes position on the guitar can be obtained in any twelve kinds of major (minor) keys respectively.

Said key scales 3,4, showing the graduation, have equal distances and are marked with chromatic scales. Therefore, wherever the key index 11 points to any key scales 2 then the alphabetic name of tonic 1 (Do) is at this key scale, e.g. in C-key the tonic 1 (Do) at C-scale, super tonic 2 (Re) at D-scale; medient 3 (Mi) at E-scale; subdominant 4 (Fa) at F-scale; dominant 5 (So) at G-scale; submedient 6 (La) at A-scale; and leadingtone 7 (Ti) at B-scale, so that each numerical note in natural scale 6 is provided respectively on said slide rule 7. Furthermore, in accordance with the principle of composing chords and naming the chords, each natural note has a root of chords, then the name of the chord is the same as the fixed alphabetic name of the root notes, e.g. in any major key the tonic note 1 (Do) has a root to compose tonic chords (1 3 5), a principle of triad and so on; subdominant chords (4 6 1), dominant seventh chords (5 7 2 4); and in minor key has minor tonic chords (6 1 3); minor subdominant chords (2 4 6); and minor dominant seventh chords (3 5$^\#$ 1)...etc. A set of each of said composing notes of common used chords is provided beside said numerical natural scale 6 on said slide rule 7, (Fig. 2); and a set of common used chords in major key is placed at the left hand of said numerical natural scales 6, and at the right hand for the minor keys chords which is called a chords composing notation scales 12. Therefore, common used chords in C-key can be read as C(1 3 5); Dm(2 4 6); Em(3 5 7); F(4 6 1); G7(5 7 2 4); Am(6 1 3); Bdim(7 2 4). A small letter "m" marked on said chords composing notation scales 12 is an indication of minor chords, such as D----m = Dm = D minor chord etc. A small letter "7" is for seventh chords such as G$_7$. According to demand, said chords composing notation scales 12 can be enlarged for application to compose a seventh chords (C$_7$); ninth chords (C$_9$); augmented (C+); diminished (C-) and C sus (Csue) chords etc. so that during practical operation, for demands twelve kinds of major (minor) keys of its basic common used chords can be obtained by means of reading the chords composing notation scales 12.

According to this embodiment of the invention at the present stage it is merely necessary to displace said slide rule once to provide:

1) A graphic synopsis for major key to relative minor key.

2) Complete notes on guitar fingerboard in twelve kinds of major (minor) keys and the notes position.

3) Chords name for common used in twelve kinds of major (minor) keys.

4) Chords composing notation scales for basic use in twelve kinds of major (minor) keys and naming of the chords.

5) A graphic synopsis for natural numercial notation to relative fixed alphabet notation in twelve kinds of major (minor) keys.

6) Further characteristic is according to the composing notes in each section of a song to compose possible chords and follow the chords composing notation scales 12 accordingly to obtain the chords name, so that it provides a guide for chords arrangement and for the equivalent chords in another tone.

Furthermore, aforesaid main rule 1 has a lower groove 8 for inserting three or more chord-finger-position transparent sheets 13 located between the said main rule 1 and slide rule 7 along the groove 8; the transparent sheets 13 have some finger position marks 14 printed thereon which indicate the position of the fingers, and are according to the composition principle of chords which are based on a triad relationship so that a chord could be a major, minor, augmented, diminished or a seventh chord. Therefore, in general, a chord is composed by three notes, so that the embodiment of the invention uses three transparent sheets as a unit, in which a main sheet 13a is marked with a chords scale 15 which follows the order of chromatic scale (Fig. 2), the same as said key scale 3, and the chords scale 15 are set to display through a chords name display window 16 on said slide rule 7. Thus a complete finger position of C-chord in C-key is provided by means of setting C-scale of chords scales 15 showing under the chords name displaying window 16, then each sheet of said chords finger position transparent sheets 13 point out all composed notes (135) of C-chord. For some special chords reasons, one should set complete position marks of 1 (Do) notes with 5 (sol) notes on the main transparent sheet 13a, set 3 (Mi) notes on the second sheet (or called minor sheet) 13b, and set all 1 (Do) notes on 1st, 2nd, 3rd, 4th strings on the third sheet (or called 7-th or 6-th sheet) 13c, so that if:

1) said second sheet (minor sheet) 13b of 3 (Mi) notes is set individually to shift to 3b (Mi flat), means for shifting up one fret thus compose a Cm-chord (1 3b 5), which is located by a minor chords position hole 19 (Fig. 2),

2) said third sheet (7-th sheet or 6-th sheet) 13c of 1 (Do) notes is set individually to shift to 7b (Ti flat), means for one fret movement thus compose a C7-chord (1 3 5 $7^b$), also being located by a 7-th chords position hole 20.

3) third sheet 13c of 1 (Do) notes is set individually to 6 (La) notes, means for two frets movement thus compose a C6-chord (1 3 5 6), also located by a 6-th chord position hole 21.

4) second sheet (minor) 13b is set together with the third sheet (6-th or 7-th sheet) to compose a Cm6 or Cm7 means for: C-chord (1 3 5) + minor sheet ($3^b$) + 7-th sheet ($7^b$) = Cm7 (1 $3^b$ 5 $7^b$);
C-chord (1 3 5) + minor sheet ($3^b$) + 6-th sheet (6) = Cm6 (1 $3^b$ 5 6)

5) and so on, with the composing notes of a chord, the special composing notes transparent sheet is provided for the various composing notes, in order to expand the application of the invention.

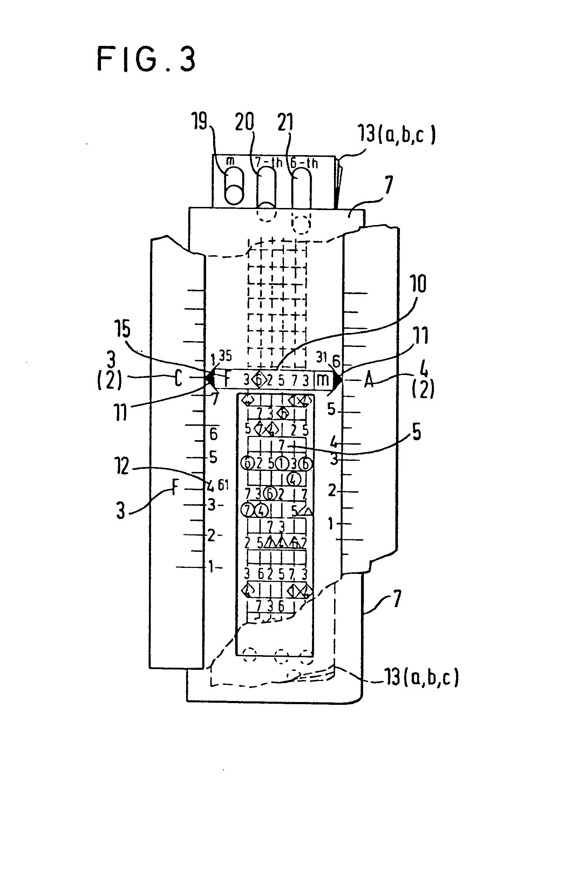

Furthermore, as each unit of a chords position is shifted to next higher or lower frets on each strings means for changing by semitones, a C-chord finger position is shifted for two higher frets to becomes a D-chord, and (Fig. 3) for five higher frets becomes a F-chord, and for one fret lower becomes a B-chord ......etc. Said chords scales 15 on main transparent sheet 13a are designed exactly to display on said chords name displaying window 16 on slide rule 7, so that an additional characteristic is provided as:

7) during the practical operation the invention provides hundreds of common used chords names with a complete finger position on guitar fingerboard in any twelve kinds of major (or minor) keys.

Shortly summarized the invention is concerned with a guitar chords slide rule device which is characterized in that a guitar fingerboard diagram with a fixed complete set of numerical notes is provided in any concerned key of song by means of a main rule and a slide rule setting key values and the answers obtained through a reading window on a slide rule from a main rule depending upon reading a graphic scale, including a unit of special design of chords-finger-position transparent sheets. The invention provides a synopsis of major to relative minor keys, naming of common used chords with its composing notes, a complete finger position of chords on fingerboard, a synopsis of numerical notation to relative alphabetic notation as well as a guide of chords arrangement for a song and guide of change tone for the equivalent chords.

Claims:

1. Guitar chords slide rule device, characterized by being composed of a main rule (1), a slide rule (7), a transparent chords-finger-position sheets (13) unit, said main rule (1) having chromatic scales (2) and a guitar fingerboard diagram (5) marked with numerical notion, said slide rule (7) having a key index and a displaying window (9) to display complete notes on the fingerboard in any determined key, said key index maintaining movement in exactly the same proportion as key scales relative to frets of the fingerboard diagram.

2. Guitar chords slide rule device as claimed in claim 1, characterized by including a synopsis of major to relative minor keys and a synopsis of numerical notation to relative alphabetic notation, said numerical notation with composing notes of chords scales (12) being based on each basic note providing a common used chords name scale, as well as a guide for chords arrangement, and for the equivalent chords in another key tone.

3. Guitar chords slide rule device as claimed in claim 1 or 2, characterized by including a unit of transparent sheets (13) with finger position marks (14) piled on one another for indicating complete finger positions of a chord on said fingerboard diagram (5); including a main transparent sheet (13a) with a chords scale in a chromatic order for maintaining the movement in exactly the same proportion as said finger position marks (14) relative to the notes on said fingerboard diagram (5), the other sheets (13b, 13c) having variable note marks in order to accord with some special composing notes of a chord by means of position holes (19, 20, 21) between said transparent chord sheets.

FIG.1

FIG.2

# FIG. 3

## EUROPEAN SEARCH REPORT

European Patent Office

| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| | US - A - 3 668 967 (A. MALIS)<br>* claims *<br>-- | 1,3 | G 09 B 15/02<br><br>G 10 G 1/02 |
| | US - A - 3 894 465 (L.E. SIMMONS)<br>* claims *<br>-- | 1,3 | |
| | US - A - 4 069 737 (J.O. ANDERSSON)<br>* fig. 1 *<br>-- | 1,2 | |
| | DE - C - 566 262 (R. HOFFMANN)<br>* claim 3 *<br>-- | 2 | TECHNICAL FIELDS SEARCHED (Int.Cl.3) |
| A | US - A - 3 748 947 (R.E. FREIHEIT)<br>* complete document *<br>-- | | G 09 B 15/00<br><br>G 10 G 1/02 |
| A | US - A - 2 814 231 (V.L. JONES)<br>* complete document *<br>---- | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 21-07-1980 | FUCHS |

EPO Form 1503.1  06.78